(19) Europäisches Patentamt

European Patent Office

Office européen des brevets

(11) **EP 0 519 028 B1**

(12) **EUROPÄISCHE PATENTSCHRIFT**

(45) Veröffentlichungstag und Bekanntmachung des Hinweises auf die Patenterteilung:
**20.10.1999 Patentblatt 1999/42**

(21) Anmeldenummer: **92901036.1**

(22) Anmeldetag: **20.12.1991**

(51) Int. Cl.⁶: **B01D 65/02**, B01D 61/14,
B23H 1/10, B23H 3/10

(86) Internationale Anmeldenummer:
**PCT/CH91/00275**

(87) Internationale Veröffentlichungsnummer:
**WO 92/11923 (23.07.1992 Gazette 1992/19)**

(54) **VORRICHTUNG ZUM REINIGEN DER BEARBEITUNGSFLÜSSIGKEIT FÜR EINE ELEKTROEROSIVE ODER ELEKTROCHEMISCHE BEARBEITUNGSMASCHINE**

DEVICE FOR CLEANSING THE MACHINING FLUID FOR A SPARK-EROSION OR ELECTROCHEMICAL PROCESSING MACHINE

DISPOSITIF POUR LE NETTOYAGE DU LIQUIDE D'USINAGE POUR UNE MACHINE D'USINAGE PAR ELECTRO-EROSION OU ELECTROCHIMIQUE

(84) Benannte Vertragsstaaten:
**CH DE ES FR IT LI SE**

(30) Priorität: **07.01.1991 CH 3191**

(43) Veröffentlichungstag der Anmeldung:
**23.12.1992 Patentblatt 1992/52**

(73) Patentinhaber: **SAE Immobilien AG
6314 Neuägeri (CH)**

(72) Erfinder: **SIEG, Arno
CH-6648 Minusio (CH)**

(74) Vertreter:
**Münch, Otto, Dipl.-Ing. et al
Isler & Pedrazzini AG,
Patentanwälte,
Postfach 6940
8023 Zürich (CH)**

(56) Entgegenhaltungen:
EP-A- 0 245 715          EP-A- 0 321 751
EP-A- 0 355 633          DE-A- 2 449 817
DE-A- 3 727 275          FR-A- 2 063 632
JP-A- 2 307 587

- PATENT ABSTRACTS OF JAPAN vol. 13, no. 211 (C-597)(3559) 17. Mai 1989 & JP,A,1 030 603 ( JUN KAYABA ) 1. Februar 1989 siehe Zusammenfassung & WORLD PATENTS INDEX LATEST Section Ch, Week 8911, Derwent Publications Ltd., London, GB; Class D, AN 89-080008 siehe Zusammenfassung
- PATENT ABSTRACTS OF JAPAN vol. 3, no. 114 (C-59)21. September 1979 & JP,A,54 094 476 ( HITACHI PLANT KENSETSU K.K. ) 26. Juli 1979 siehe Zusammenfassung & WORLD PATENTS INDEX Section Ch, Week 7936, Derwent Publications Ltd., London, GB; Class D, AN 79-65375B SA 54539 030siehe Zusammenfassung
- WORLD PATENTS INDEX LATEST Section Ch, Week 8635, Derwent Publications Ltd., London, GB; Class J, AN 86-22831& JP,A,61 157 306 (EBARA MFG K.K.) 17. Juli 1986 siehe Zusammenfassung & PATENT ABSTRACTS OF JAPAN vol. 10, no. 355 (C-388)(2411) 29. November 1986 siehe Zusammenfassung

**Beschreibung**

Die Erfindung betrifft eine Vorrichtung gemäss Oberbegriff des Patentanspruchs 1.

Die Bearbeitungsflüssigkeit für die elektroerosive Bearbeitung von Werkstücken (EDM) ist bekanntlich ein Dielektrikum mit sehr niedrigem elektrischen Leitwert, das beim Senkerodieren mittels Formelektroden aus Kohlenwasserstoffen und beim erosiven Schneiden mittels Drahtelektroden aus deionisiertem Wasser besteht. Als Bearbeitungsflüssigkeit für die elektrochemische Bearbeitung von Werkstücken (ECM) ist ein Elektrolyt mit höherem elektrischen Leitwert vorgesehen, der das Werkstück berührt. Die Bearbeitungsflüssigkeiten werden bei beiden Verfahren in einem ständigen Kreislauf zur Bearbeitung der Werkstücke verwendet. Im Laufe der Betriebszeit verändert die ständig zunehmende Verschmutzung der Bearbeitungsflüssigkeit deren Reinheit und deren elektrischen Leitwert, was den Bearbeitungsvorgang unerwünscht und nachteilig beeinflusst. Daher sind Filter entweder als Tiefenfilter oder Membranfilter eingesetzt, die aus der Bearbeitungsflüssigkeit immer die infolge der Bearbeitung entstandenen Verunreinigungen entfernen. Die als Filtermatte oder Filterpatrone ausgebildeten Tiefenfilter haben den Nachteil, dass während ihres Betriebes die Filtereigenschaften sich unkontrolliert ändern. Die aus der Bearbeitungsflüssigkeit gefilterten Verunreinigungspartikel verstopfen die Poren, sodass die Durchflussmenge der gefilterten Bearbeitungsflüssigkeit verringert wird. Eine Rückspülung der Tiefenfilter zu ihrer Reinigung ist nicht möglich, sodass die in die Poren eingedrungenen Verunreinigungspartikel nicht entfernt werden können. Daher werden in jüngerer Zeit Membranfilter verwendet, welche mittels Rückspülung von den Verunreinigungspartikeln befreit werden können.

Der Reinigungseffekt wird dadurch noch verbessert, weil die Verunreinigungspartikel mehrheitlich auf der Membranoberfläche angesammelt sind.

Die JP-OS 62-24917 zeigt einen Membranfilter für eine elektroerosive Bearbeitungsmaschine, der nur im Teilbereich eines Ionentauschers eingesetzt wird und nur einen Teil der gesamten Bearbeitungsflüssigkeit filtert. Der grössere Teil der Bearbeitungsflüssigkeit wird durch einen Tiefenfilter gefiltert.

Die EP-OS 0321751 zeigt eine Filtervorrichtung, in der die verunreinigte Bearbeitungsflüssigkeit einer Erosions-Maschine durch Sedimentieren vorgereinigt, durch ein Flockungsmittel aufbereitet und so in einen rohrförmigen Membranfilter geführt wird, dass der grössere Anteil der Bearbeitungsflüssigkeit an der Filterwand ungefiltert vorbeifliesst und nur zum Spülen bzw. Reinigen der Filterwand verwendet wird. Der kleinere Anteil der Bearbeitungsflüssigkeit geht senkrecht durch die Membrane und wird gefiltert. In kurzen zeitlichen Anständen wird der Membranfilter mittels der gereinigten Bearbeitungsflüssigkeit, auf welche Druckluft gegeben wird, rückgespült und gereinigt. Die nun verschmutzte Flüssigkeit wird wieder dem gesamten Filtrierprozess wie Vorreinigung und Filtrieren zugeführt. Der Reinigungseffekt ist ungenügend, weil manche Teile der Membranoberfläche ungleichmässig rückgespült werden können, was auf die ungleichmässige Verteilung und Eindringtiefe der Verunreinigungspartikel auf der gesamten Membranoberfläche zurückzuführen ist. Daher wird ein erhöhter Rückspüldruck und ein grösseres Volumen der für die Rückspülung verwendeten gereinigten Bearbeitungsflüssigkeit benötigt. Der erhöhte Rückspüldruck kann die Filtermembrane beschädigen. Das grosse Volumen der für die Reinigung benötigten Flüssigkeit verringert den Wirkungsgrad der Filtrierung, da diese Flüssigkeit die schon einmal gefiltert war, den gesamten Filterprozess nun wieder durchlaufen muss.

In der DE-A-2 449 817 ist die Suspension von Filterkuchen mittels Vibratoren gezeigt, sowie eines Rührwerkes. Dabei wird das Filter kontinuierlich vibriert. Während der Vibration fliesst ein Teil der konzentrierten Suspension durch eine Abflussleitung ab. Dadurch wird ebenfalls der Wirkungsgrad gesenkt.

In Patent Abstracts of Japan von JP-A-2 307 587, Vol. 15, No. 96, ist ein Filter mit einem Ultraschallvibrator beschrieben. Abscheinend wird das Filter rückgespült.

In Patent Abstracts of Japan von JP-A-54 094 476 Vol. 3, No. 114, ist eine weitere Filtervorrichtung gezeigt, die etwa jener nach DE-A-2 449 817 entspricht.

Gemäss der EP-OS 0355632 ist der gleiche röhrenförmige Membranfilter in eine Aufbereitungsanlage für eine Elektroerosionsmaschine so eingebaut, dass der grösste Anteil der verschmutzten Bearbeitungsflüssigkeit, die bekanntlich als Konzentrat bezeichnet wird, ungefiltert an der Filterwand vorbeifliesst und zum Anbau des an der Filterwand sich bildenden Schmutzkuchens dient. Nur der kleinere Anteil der Bearbeitungsflüssigkeit gelangt durch die Filterwand und wird gefiltert. Dieser gefilterte kleine Anteil der Bearbeitungsflüssigkeit wird bekanntlich als Permeat bezeichnet. Hinzu kommt, dass der ungefilterte grössere Anteil, der nur zum Reinigen bzw. zum Spülen der Filterwand dient, seine Strömungsrichtung durch den röhrenförmigen Membranfilter zyklisch umkehrt und dadurch den Schmutzkuchen, der an der konzentratseitigen Filterwand sich ungleichmässig aufbaut, von beiden Seiten des Filterrohrs entfernt. Ferner gibt es eine zyklische Rückspülung durch das Filtermaterial von der Permeatseite zur Konzentratseite mit Hilfe von Druckluft. Die Nachteile der Rückspülung, welche dieselben sind wie vorhin beschrieben wurde, werden noch einmal kurz erwähnt. Die mit erhöhtem Druck, der mittels Druckluft erzeugt wird, erfolgte Rückspülung benötigt ein grosses Volumen des Permeat, welches dann wieder dem gesamten Filtriervorgang wie Sedimentieren und Filtrieren unterworfen werden muss. Der Wirkungsgrad dieser bekannten Aufbereitungsanlage ist klein, weil ein beträchtlicher Anteil des Permeat nicht seiner eigentlichen Zweckbestimmung, nämlich als gereinigte Bearbeitungsflüssigkeit dem elektroerosiven Prozess zugeführt wird, sondern für die Filterrückspülung verwendet wird. Diese bekannte Aufbereitungsanlage, welche die Umkehrung der Strömungsrichtung des einen und nur der Reinigung dienenden Anteils der Bearbeitungsflüssigkeit und die Rückspülung des Filtermaterials zyklisch steuert, ist nicht nur aufwendig und kompliziert, sondern verschlechtert das Filtrierergebnis, da der eigentliche Filtervorgang bei jedem Rückspül-Zyklus unterbrochen wird, was bei kurzzeitiger Folge der Rückspül-Zyklen als Nachteil sich bemerkbar macht.

Die EP-OS 0355633 zeigt dasselbe wie bei den bereits diskutierten bekannten Aufbereitungsanlagen. Die Umkehr der Strömungsrichtung des einen und grösseren Anteils der verschmutzten Bearbeitungsflüssigkeit, der ungefiltert von einem Ende zum anderen Ende des röhrenförmigen Membranfilters fliesst, dient nur der Reinigung der Filterfläche auf der Konzentratseite. Der Membranfilter wird mittels Druckluft rückgespült. Zusätzlich wird der Anteil der Bearbeitungsflüssigkeit, der nur zur Reinigung der konzentratseitigen Filterwand dient, mittels eines konventionellen grossporigen Fliessfilters teilweise gereinigt. Die Nachteile sind auch bei dieser Aufbereitungsanlage dieselben wie oben beschrieben.

Die Erfindung hat die Aufgabe, die Nachteile der bekannten Aufbereitungsanlagen für elektroerosive Bearbeitungsmaschinen nicht nur zu beseitigen, sondern auch weitere Vorteile zu erzielen. Die Erfindung ist sowohl für elektroerosive als auch für elektrochemische Bearbeitungsmaschinen vorgesehen. Die Erfindung verkürzt die Rückspülzeiten, benötigt für die Rückspülung nur ein sehr kleines Volumen der Bearbeitungsflüssigkeit und erhöht damit den Wirkungsgrad der Aufbereitungsanlage. Sie benutzt einfache Membranfilter und verlängert deren Lebensdauer. Sie ist umweltsverträglich, weil praktisch keine Bearbeitungsflüssigkeit, die ein Dielektrikum oder ein Elektrolyt sein kann, an die Umwelt abgegeben wird und die ausgefilterten Verunreinigungen bzw. Abfallprodukte aus der elektroerosiven oder elektrochemischen Bearbeitung von Werkstücken in fester Form entsorgt werden.

Die Aufgabenstellungen der Erfindung werden durch die Merkmale des kennzeichnenden Teils des Patentanspruchs 1 gelöst.

Ausführungsbeispiele der Erfindung werden anhand der Zeichnungen näher erläutert.

Es zeigen:

Figur 1: die gesamte Reinigungsanlage, in welcher ein erstes Ausführungsbeispiel des Filterbauteils integriert ist;

Figur 2: ein zweites Ausführungsbeispiel des Filterbauteils in Schnittdarstellung, welches Filterbauteil in die gesamte Reinigungsanlage an den angegebenen Anschlusstellen eingesetzt wird;

Figur 3: in Schnittdarstellung ein drittes Ausführungsbeispiel des Filterbauteils, das in die gesamte Reinigungsanlage an den angebenen Anschlusstellen eingefügt wird;

Figur 4: in Schnittdarstellung ein viertes Ausführungsbeispiel des Filterbauteils, das an den angegebenen Anschlusstellen in die gesamte Reinigungsanlage eingesetzt wird;

Figur 5: in Schnittdarstellung ein fünftes Ausführungsbeispiel des Filterbauteils, das in die gesamte Reinigungsanlage an den angegebenen Anschlusstellen eingesetzt wird.

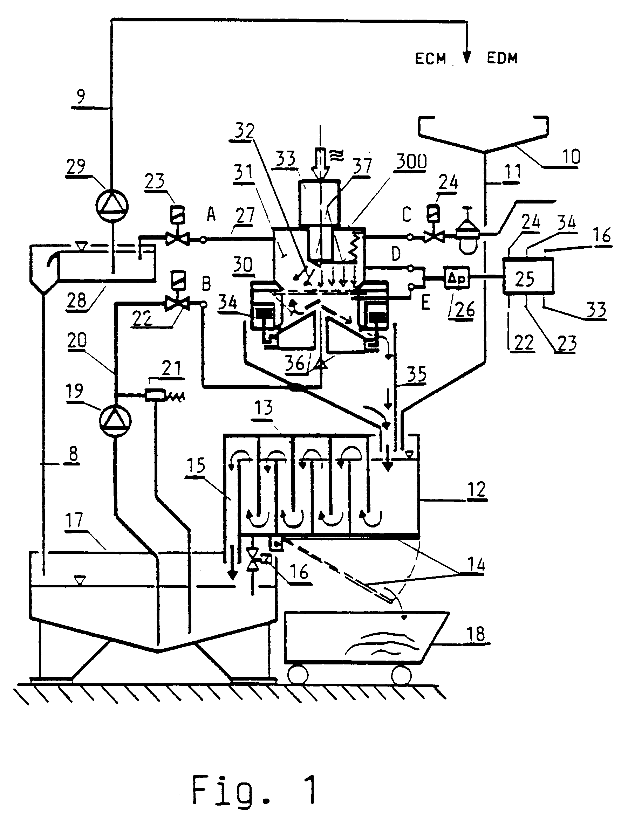

Die gesamte Reinigungsanlage der Figur 1 enthält den nur symbolisch angedeuteten Arbeitstank 10, in welchem die Bearbeitungsflüssigkeit gesammelt wird, die durch das elektroerosive Schneiden, Senkerodieren oder elektrochemische Bearbeiten verschmutzt ist. Diese Bearbeitungsmethoden bringen bekanntlich Abfallprodukte in die Bearbeitungsflüssigkeit. Solche Abfallprodukte, die im folgenden als Verunreinigungspartikel bezeichnet werden, bestehen im wesentlichen aus Metalloxiden der Bearbeitungselektrode und des bearbeiteten Werkstückes sowie aus Verbrennungsprodukten in der Grössenordnung von 0,2 µm bis 0,5 mm.

Die verunreinigte und im Arbeitsbehälter 10 gesammelte Bearbeitungsflüssigkeit gelangt über Leitung 11 in das vier- oder rechteckige Sedimentiergefäss 12, in welchem Umlenkwände 13 die langsame Strömung der Bearbeitungsflüssigkeit in Fallrichtung umlenken, so dass die Verunreinigungspartikel mit grösserem Gewicht sich auf dem Boden ablagern. Es besteht auch die Möglichkeit, die Verunreinigungspartikel durch ein Magnetfeld so zu beeinflussen, dass diese in Richtung Boden des Sedimentiergefässes abgelenkt werden. Die magnetische Beeinflussung erstreckt sich auch auf Partikeln von kleinerem Gewicht und verbessert so die Sedimentation beträchtlich. Die vorgereinigte Flüssigkeit verlässt über den Ausfluss 15 das Sedimentiergefäss 12 und gelangt in den Konzentratbehälter 17. Der Boden 14 des Sedimentiergefässes 12 kann zu Reinigungszwecken entfernt werden. Die Umlenkwände 13 sind an den nicht gezeichneten Seitenwänden des Gefässes 12 oder an seinem Deckel befestigt, so dass die Reinigung infolge Oeffnung der Klappe 14 nicht behindert wird. Die Reinigung des Sedimentiergefässes 12 wird in längeren zeitlichen Abständen bzw. Zyklen durchgeführt. Der Zufluss der Bearbeitungsflüssigkeit aus Leitung 11 wird gesperrt. Das Ventil 16 wird geöffnet, so dass die im Sedimentiergefäss 12 befindliche Flüssigkeit in den Konzentratbehälter 17 abfliessen kann. Der als Klappe ausgebildete Boden 14 wird geöffnet, wie in Figur 1 gezeichnet ist. Der am Boden angesammelte Schmutzkuchen wird in einem Abfallwagen 18 entsorgt. Da der Schmutzkuchen nur noch sehr wenig Flüssigkeit enthält, ist das zu entsorgende Volumen klein, so dass die Umweltbelastung wesentlich kleiner ist als bei den bekannten Sedimentiergefässen. Das Sedimentiergefäss 12 kann auch einen zylinderförmigen Grundriss haben. In diesem Fall sind kreisförmige Umlenkwände in Form von Röhren konzentrisch um den gemeinsamen Mittelpunkt angeordnet. Der Zufluss 11 der Bearbeitungsflüssigkeit erfolgt in zweckmässiger Weise vor der Umlenkwand bzw. Umlenkrohr mit dem grössten Durchmesser.Der Ausfluss 15 befindet sich im gemeinsamen Mittelpunkt. Diese kreisförmige Ausführungsform des Sedimentiergefässes hat die gleiche Schnittdarstellung wie in Figur 1 nur mit den Ausnahmen der anderen Anordnung des Ausflusses 15, des Ventils 16 und des als Klappe ausgebildeten Bodens 14. Das Sedimentiergefäss kann auch als archimedische Spirale oder sogar als Doppelspirale ausgebildet sein. Der Vorteil des Sedimentiergefässes mit kreisförmigem Querschnitt liegt in der kompakten Bauweise und bringt Platzersparnis bei maximal langen Strömungswegen.

Die vorgereinigte Bearbeitungsflüssigkeit wird im Konzentratbehälter 17 gesammelt und nach Bedarf mittels Pumpe 19 über Leitung 20 und geöffnetes Ventil 22 in das erste in Figur 1 gezeichnete Ausführungsbeispiel des Filterbauteils gepumpt. Der zulässige Druck im Filterbauteil wird durch das Ueberdruckventil 21 eingestellt.

Das Filterbauteil, das im wesentlichen einen Konzentratraum 30 und einen Permeatraum 31 mit einem oder mehreren Ultraschallsendern 33 enthält, welche Räume durch ein Gehäuse 300 nach aussen abgeschlossen und im inneren über einen Membranfilter 32 in Verbindung stehen, ist über die Anschlüsse A, B, C, D, E in die gesamte Reinigungsanlge integriert. Das Filterbauteil kann einen beliebigen Querschnitt haben; z.B. zylinderförmig, elliptisch oder polygon. Dies hängt vom zur Verfügung stehenden Raum und von der optimalen Filterfläche ab, die von Einsatzort zu Einsatzort variieren kann. In der Figur 1 hat das Filterbauteil ein Gehäuse 300 mit einem zylinderförmigen Querschnitt. Der Boden 36 des Konzentratraumes 30 ist in Figur 1 so gezeichnet, dass seine beiden Positionen "geschlossen" während dem Filtervorgang und "offen" während dem Reinigungszyklus ersichtlich sind. Während dem normalen Filtervorgang sind die Ventile 22 und 23 der Anschlüsse A, B geöffnet und das Ventil 24 des Anschlusses C geschlossen, welche vom später noch näher beschriebenen elektronischen Steuergerät 25 angesteuert werden. Das Konzentrat strömt über Leitung 20 in den Konzentratraum 30, dessen Boden 36 mittels der Schliessorgane 34, von denen nur zwei sichtbar sind, geschlossen und durch die O-Ringe abgedichtet ist. Versuche haben ergeben, dass die Zufuhr im Mittelpunkt des Bodens mit haubenförmigen Verteilwänden eine gleichmässige Verteilung des Konzentrats und somit auch der noch vorhandenen Verunreinigungspartikeln im gesamten Konzentratsraum gewährleistet. Dem durch den Membranfilter 32 gedrückten Konzentrat werden die letzten Verunreinigungspartikel entzogen, so dass die Bearbeitungsflüssigkeit vollkommen gereinigt als Permeat in den Permeat-Raum 31 eintritt.Der zwischen den beiden Räumen 30, 31 befestigte und abgedichtete Membranfilter 32 besteht aus bekanntem Material, kann im Handel bezogen werden und wird von vielen Herstellern unter den verschiedenen Handelsmarken angeboten. Die Grösse der Filterfläche wird dem jeweiligen Bedürfnis angepasst. Die Figur 1 zeigt nur eine Ultraschall-Quelle 33, deren Abstrahlfläche 37, die auf der linken Hälfte der Figur 1 als Abstrahlfläche und auf der rechten Hälfte der Zeichnung als Abstrahlmembrane gezeichnet ist, so in den Permeat-Raum 31 hineinragt, dass der Membranfilter 32 beschallt werden kann. Es können auch mehrere Ultraschall-Quellen vorgesehen werden. Der Zweck und die Funktionsweise der Ultraschall-Quellen werden im Zusammenhang mit den Reinigungszyklen des Membranfilters 32 später beschrieben. Das Permeat gelangt während dem Filtervorgang über Leitung 27, geöffnetem Ventil 23 in den Permeat-Behälter 28, der auch Saubertank genannt wird. Die Pumpe 29 fördert über Leitung 9 die saubere Bearbeitungsflüssigkeit an den Ort der elektroerosiven Bearbeitung von Werkstücken mittels Elektroden (EDM) oder der elektrochemischen Bearbeitung von Werkstücken ohne Elektroden (ECM). Danach wird die durch die Bearbeitung verunreinigte Bearbeitungsflüssigkeit im Arbeitsbehälter 10 gesammelt und wieder dem Kreislauf der Filterung unterzogen. Diese Filterprozesse können beliebig oft wiederholt werden. Für den seltenen Fall, dass der Zufluss des Permeat in den Permeat-Behälter 28 grösser ist als der Abfluss zum Ort der Bearbeitung, ist die Ueberfliessleitung 8 vorgesehen. Im normalen Fall sind Zufluss- und Abflussmenge aufeinander abgestimmt.

In zeitlichen Abständen wird der Membranfilter 32 gereinigt, wodurch die in den Membranporen sitzenden Verunreinigungspartikel entfernt werden. Je nach Beschaffenheit des Membranfilters 32 und der Filterleistung entsteht zwischen dem Konzentratraum 30 und dem Permeat-Raum 31 eine Druckdifferenz $\Delta P$, die vom Drucksensor 26 zwischen den Anschlüssen D und E detektiert und an das elektronische Steuergerät 25 gegeben wird. Wenn die Druckdifferenz $\Delta P$ den für das Material des Membranfilters zulässigen Wert erreicht hat, wird ein Reinigungszyklus eingeleitet. Der zulässige Wert wird entsprechend dem verwendeten Filtermaterial als SOLL-Wert in das Steuergerät 25 eingegeben, in welchem mehrere Programme für verschiedene Reinigungszyklen eingespeichert sind. Jedes der in einem PROM Bauteil eingespeicherten Programme enthält einen Reinigungszyklus mit seinen einzelnen Tätigkeitsmerkmalen wie Ultraschallfrequenz, Druckaufbau im Raum 31, Rückspülen, Entfernen der Partikel aus Raum 30, von unterschiedlicher zeitlicher Länge und unterschiedlicher Reihenfolge der Teilmerkmale. Beim Ausführungsbeispiel der Figur 1 sei angenommen, dass die Zeit für den gesamten Reinigungszyklus 5 Sekunden betragen soll. Wenn der Reinigungszyklus beginnt, weil die Druckdifferenz $\Delta P$ den SOLL-Wert erreicht hat, veranlasst das Steuergerät 25 die Schliessung des Ventils 23 und Oeffnung des Ventils 24, durch dessen geregelte Oeffnung im Permeat-Raum 31 der für die Rückspülung des Membranfilters 32 notwendige Druck aufgebaut wird, was durch ein fluides Druckmedium, z.B.

Druckluft, geschieht. Dieser Druck ist etwas kleiner als der durch die Pumpe 90 erzeugte Druck, so dass das Ventil 22 während der Reinigung des Membranfilters 32 geöffnet bleiben kann. Danach wird die Ultraschall-Quelle 33 für etwa 4 Sekunden vom Steuergerät 25 in Betrieb gesetzt, dessen Abstrahlmembran 37 auf die Permeatseite des Membranfilters 32 gerichtet ist. Durch die Schallwellen werden die Verunreinigungspartikel, die sich während des Filterns der Bearbeitungsflüssigkeit in den Membranporen festgesetzt hatten, gelockert und veranlasst, in den Konzentratraum 30 zu wandern. Der Frequenzbereich der Ultraschall-Quelle 33 liegt zwischen 10 kHz und 2 MHz. Die Rückspülung des Membranfilters 32 vom Permeat-Raum 31 in den Konzentrat-Raum 30 beginnt nach Oeffnung des Bodens 36. Zu diesem Zweck steuert das Steuergerät 25 die Schliessorgane 34 an, welche den Boden 36 von der in der linken Bildhälfte symbolisch dargestellten Schliessstellung um ca. 2 mm in die in der rechten Bildhälfte symbolisch dargestellten Offenstellung verschiebt. Der Boden bleibt eine bestimmte im Steuergerät 25 programmierte Zeit geöffnet bis der mit dem durch den Ultraschall gelockerten und rückgespülten Verunreinigungspartikeln angereicherte Inhalt des Konzentrat-Raumes 30 in den Auffangbehälter 35 geflossen ist. In dieser Zeit findet das Durchspülintervall des Konzentrat-Raumes 30 mit Hilfe der Pumpe 19 aus dem Konzentratbehälter 17 statt. Durch diese Massnahme wird im Konzentrat-Raum 30 die gleiche Konzentration an Verunreinigungspartikeln erzielt wie im Konzentratbehälter 17. Bei dem in Figur 1 gezeigten Ausführungsbeispiel bleibt der Boden 36 während des Rückspülzyklus und des Durchspülintervalls drei Sekunden geöffnet. Das Steuergerät 25 beendet die Beschallung durch die Ultraschall-Quelle 33, schliesst den Boden 36 durch die Schliessorgane 34 und das Ventil 24, öffnet das Ventil 23. Der Filtervorgang kann wieder beginnen. Infolge des ca. vier Sekunden dauernden Reinigungszyklusses sind nur 0,5 l des Permeat der Bearbeitungsflüssigkeit nötig, welche in das Sedimentiergefäss 12 gelangen und nicht verloren gehen.

Diese Kombination von Ultraschall und Rückspülung des Membranfilters 32 verringert das Rückspülvolumen auf ein Minimum und verbessert daher den Wirkungsgrad der gesamten Filteranlage. Der Membranfilter erlangt hierdurch die ursprüngliche porentiefe Sauberkeit auf der gesamten Fläche. Sämtliche Membranfilterparameter erlangen ihre anfänglichen Werte, womit innerhalb eines grossen Betriebszeitraumes von mehreren Monaten die Bearbeitungsflüssigkeit von gleicher Qualität ist, so dass in der gesamten Reinigungsanlage nur der Anteil der verdunsteten Bearbeitungsflüssigkeit zu ersetzen ist. Ein weiterer Vorteil der Kombination von Ultraschall und Rückspülung ist darin zu sehen, dass die gesamte Fläche des Membranfilters 32 ohne Einfluss der an der Filterfläche vorhandenen Verstopfungstopographie gereinigt wird. Unter Verstopfungstopographie soll verstanden werden, dass die Verunreinigungspartikel während des normalen Filtrierens an willkürlichen Teilen der Fläche des Membranfilters 32 angehäuft werden, wo hingegen andere Flächenteile keine oder nur wenige Verunreinigungspartikel haben. Die Verteilung der Flächenteile, die als Verstopfungstopographie definiert wird, erfolgt ohne Gesetzmässigkeit und ist von Filtervorgang zu Filtervorgang unterschiedlich. Die Rückspülung ohne Verwendung von Ultraschall hat bei den Flächenteilen mit vielen Verunreinigungspartikeln je nach Verstopfungsgrad keine bis geringe Wirkung, weil die anderen Flächenteile mit wenig Verunreinigungspartikeln die Rückspülflüssigkeit sehr leicht durchgehen lassen. Zur Vermeidung dieses Nachteils wird bei der bekannten Rückspülung, die den Einsatz von Ultraschall nicht kennt, Druck und Volumen der Rückspülflüssigkeit stark erhöht, wodurch der Membranfilter zerstört werden kann und der Wirkungsgrad $\eta$ reduziert wird.

$$\eta\ \% = \frac{\text{filtriertes Volumen}}{\text{filtriertes Volumen} + \text{Rückspülvolumen}} \times 100$$

Bei der erfindungsgemässen Kombination von Ultraschall und Rückspülen wird der Wirkungsgrad $\eta$ verbessert, weil nur ein geringes Rückspülvolumen benötigt wird.

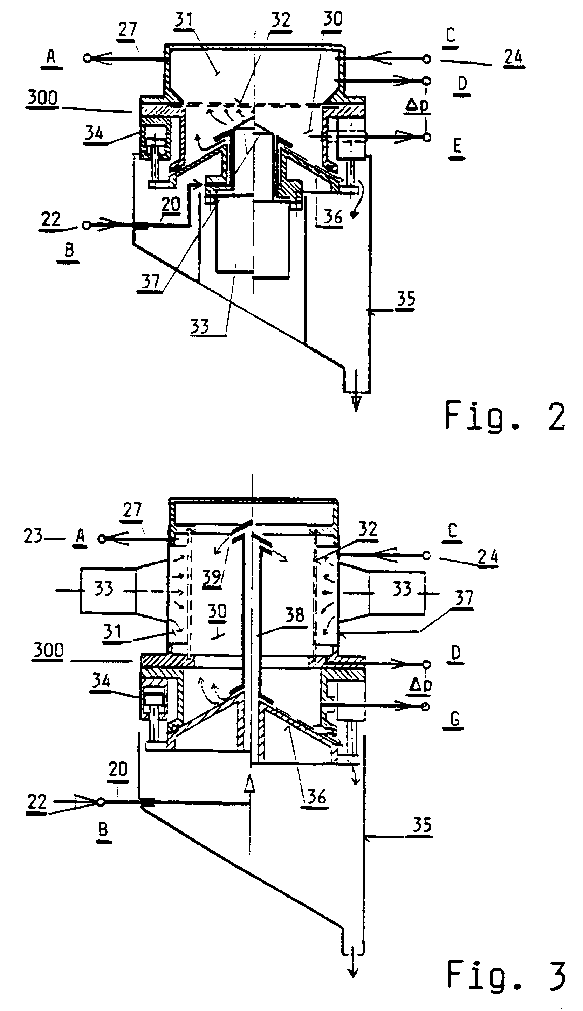

Wie schon eingangs erwähnt, werden je nach Grösse und Form der Fläche des Membranfilters 32 eine oder mehrere Ultraschall-Quellen 33 so angeordnet, dass die gesamte Fläche gleichmässig beschallt wird und keine schalltoten Räume entstehen können. Die Ultraschall-Quelle(n) 33 werden vom Steuergerät 25 so angesteuert, dass während der vorgesehenen Beschallungszeit der Membranfilter entweder kontinuierlich oder als Impulse mit einer programmierten Repetitionsfrequenz beschallt wird. Ferner können die Ultraschall-Quellen 33 in einer programmierten zeitlichen Reihenfolge vom Steuergerät 25 angesteuert werden,so dass mindestens eine Ultraschall-Wanderwelle die Fläche des Membranfilters 32 beschallt. Dies wird später im Zusammenhang mit anderen Ausführungsbeispielen der Figuren 2 - 5 näher erläutert, welche Figuren nur die verschiedenen Filterbauteile zeigen, die an den Anschlusstellen A, B, C, D, E in die Filter- und Reinigungsanlage eingebaut werden können.

Die Figur 2 zeigt einen Filterbauteil in teilweiser Schnittdarstellung, dessen Konstruktion derjenigen des Filterbauteils der Figur 1 entspricht, mit der Ausnahme, dass die Ultraschall-Quelle 33 mit ihrer Abstrahlmembrane 37 bzw. ihrer Abstrahlfläche im Boden 36 des Konzentrat-Raumes 30 eingebaut ist. Der Membranfilter 32 wird in der Figur 2 von der Konzentratseite beschallt. Die Funktionsweise des Filterns des über Leitung 20 zugeführten Konzentrates über Membranfilter 32 in den Permeat-Raum 31 und Abfluss über Leitung 27 in den Permeatbehälter 28 sowie des Reinigungszyklus des Membranfilters durch Ultraschall und Rückspülung und Durchflussintervall für den Konzentrat-Raum 30 einschliesslich Oeffnen des Bodens 36 mittels der Betätigungsorgane 34 für den Abfluss der Verunreinigungspartikeln in den Auffangbehälter 35 wurden bereits im Zusammenhang mit der Figur 1 beschrieben. zum Ausführungsbeispiel der Figur 2 sei noch gesagt, dass nur eine Ultraschall-Quelle 33 vorgesehen ist, die mit einer bestimmten Frequenz betrieben wird.

Das Ausführungsbeispiel des in Figur 3 dargestellten Filterbauteils hat einen röhrenförmigen Membranfilter 32 und einen besonderen Zufluss des Konzentrates über Leitung 20 und ein im zylinderförmigen Konzentrat-Raum 30 angebrachtes Steigrohr 38, aus dessen Ausfluss das Konzentrat oben in den Konzentrat-Raum ausfliesst und gut durchgemischt den Membranfilter 32 durchströmt. Im ebenfalls zylinderförmigen Permeat-Raum 31 sammelt sich das Permeat und gelangt über Leitung 27 und Anschlusstelle A in den Permeatbehälter 28 zur Wiederverwendung als gefilterte Bearbeitungsflüssigkeit. Die beiden Räume und der Boden 36 sind vom Gehäuse 300 umgeben. Am äusseren Umfang dieses Gehäuses sind in der Höhe des Permeat-Raumes 31 z.B. sechs Ultraschall-Quellen 33 mit ihren Abstrahlflächen 37 ringförmig um den Permeat-Raum angeordnet, so dass sie während des Reinigungszyklusses die Permeatseite des Membranfilters 32 beschallen und die Verunreinigungspartikel in den Membranporen lockern. Das Steuergerät 25 steuert den Reinigungszyklus, nachdem der Differenzdruck ΔP zwischen Konzentrat-Raum 30 und Permeat-Raum 31 den für das Filterbauteil der Figur 3 voreingestellten SOLL-Wert erreicht, was der Differenzdruckdetektor 26 feststellt und an das Steuergerät weitergibt. Ein für das Filterbauteil der Figur 3 optimaler Reinigungszyklus wird aus den im Steuergerät 25 gespeicherten Programmen verschiedener Reinigungszyklen gewählt. Es sei ein Programm gewählt, dessen Reinigungszyklus total 12 Sekunden dauern soll mit einer Beschallungszeit von 5 Sekunden, einer Rückspülzeit von 7 Sekunden und einer Durchspülzeit von 5 Sekunden, wobei die Rückspülung über Anschluss C, Permeat-Raum 31, Membranfilter 32, Konzentrat-Raum 30, geöffnetem Boden 36, Auffangbehälter 35 schon während der Beschallung beginnt. Die sechs Ultraschall-Quellen 33 beschalten die Permeatseite des Membranfilters 32 mit einer Frequenz, die im Bereich von 10 kHz bis 2 MHz liegen kann, in der Weise, dass jede der Ultraschall-Quellen mit einer bestimmten Phasenverschiebung vom Steuergerät angesteuert wird, wodurch eine Wanderwelle entsteht, die mit einer bestimmten Geschwindigkeit sich entlang des röhrenförmigen Membranfilters 32 dreht. Hierdurch werden die Membranporen noch besser gereinigt und das Material des Membranfilters noch mehr geschont zur Erlangung einer längeren Lebensdauer. Das Ausführungsbeispiel der Figur 3 vermeidet sogenannte schalltote Räume auf deren Membranfilter 32 und zwar ohne Rücksicht auf die Verschmutzungstopographie der Membranfläche, so dass ein optimaler Wirkungsgrad gewährleistet wird. Nach dem Reinigungszyklus werden der Boden 36 mittels der Schliessorgane 34 geschlossen, Ventil 23 geöffnet und Ventil 24 geschlossen. Der Filtervorgang beginnt wieder und wird durchgeführt bis zum nächsten Reinigungszyklus.

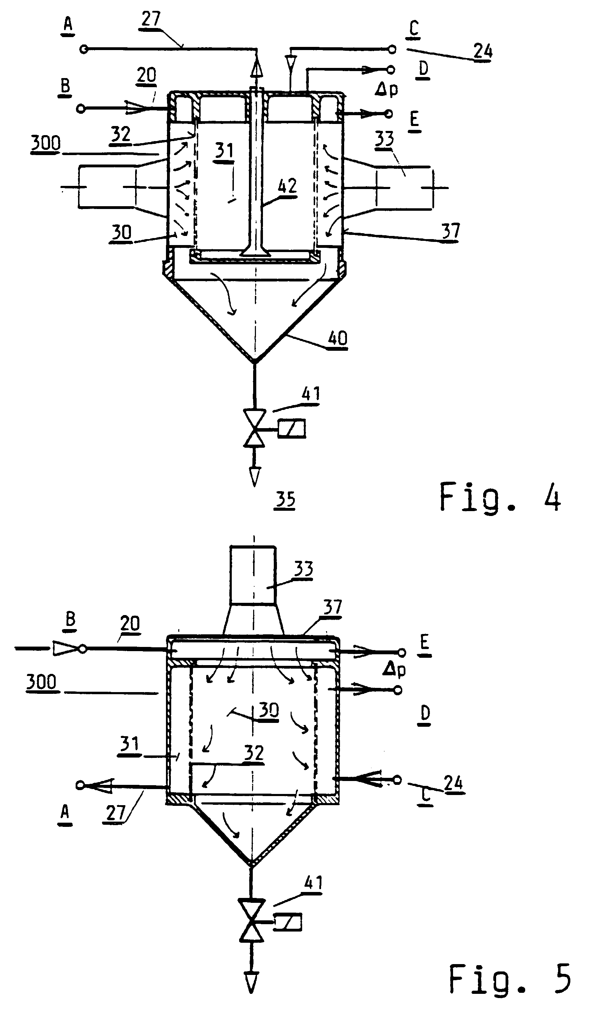

Die Figur 4 zeigt ein viertes Ausführungsbeispiel eines Filterbauteils, das in die Anschlusstellen A, B, C, D, E der Reinigungsanlage integriert wird. Der Filterbauteil enthält zylinderförmige Konzentrat- und Permeaträume 30, 31, welche durch einen röhrenförmigen Membranfilter 32 getrennt sind. Die genannten Räume sind im Gehäuse 300 untergebracht. Das Konzentrat strömt über das geöffnete Ventil 23, Anschluss B, Leitung 20 in den zylinderförmigen Konzentrat-Raum 30 und füllt den unteren Raum 40, an dessen unterster Stelle ein Ventil 41 mit einem Abfluss 35 in das Sedimentiergefäss 12 vorgesehen ist. Des Ventil 41 ist während des Filtrierens geschlossen. Das im Konzentrat-Raum 30 befindliche Konzentrat wird durch den Membranfilter 32 gedrückt und verliert die letzten Verunreinigungspartikel. Als Permeat strömt es in den Permeat-Raum 31 und gelangt über das Steigrohr 42, Leitung 27, Anschluss A, Ventil 23 in den Saubertank 28. Der Reinigungszyklus beginnt, wenn der Differenzdruck ΔP den SOLL-Wert erreicht hat. Das Steuergerät 25 schliesst Ventil 23 und öffnet Ventil 24.

Die Ultraschall-Quellen 33 sind mit ihren Abstrahlmembranen bzw. Abstrahlflächen 37 in einer bestimmten Anzahl um den Konzentrat-Raum 30 ringförmig angeordnet und beschallen während des Reinigungszyklus die Konzentratseite des Membranfilters 32. Es sei angenommen, dass der Reinigungszyklus eine Gesamtzeit von 14 Sekunden, die Beschallung eine Zeit von 5 Sekunden, die Rückspülung eine Zeit von 7 Sekunden, die Durchspülzeit eine Zeit von 5 Sekunden beanspruchen soll, wobei die Ultraschall-Quelle 33 die Konzentratseite des Membranfilters 32 mit Impulsen gemäss einem bestimmten Muster beschallen, z.B. Impulsgruppen von je 10 Impulsen pro 1 Sekunde, die durch Pausen von je 0,5 Sekunden getrennt sind. Die Verunreinigungspartikel gelangen über das geöffnete Ventil 41, Abschluss 35 in das Sedimentiergefäss 12.

Das in Figur 5 gezeigte Filterbauteil zeigt ein zylinderförmiges Ausführungsbeispiel, bei dem der Konzentrat-Raum 30 von dem ebenfalls zylinderförmigen Membranfilter 32 umschlossen ist. Der Permeat-Raum 31 umfasst den Membranfilter. Beide Räume sind im Gehäuse 300 untergebracht. Ueber die Anschlusstelle B gelangt das Konzentrat durch Leitung 20 in den Konzentrat-Raum, wird durch den Membranfilter gedrückt und verliert sämtliche Verunreinigungspartikel. Das im Permeat-Raum 31 sich sammelnde Permeat verlässt über Leitung 27, Anschlusstelle A das Gehäuse 300 des Filterbauteils und strömt in den Saubertank 28. Der Reinigungszyklus, der nach Erreichung des voreingestellten und Material sowie Fläche des Membranfilters 32 berücksichtigenden Wertes ΔP gestartet wird, besteht aus der Kombination von Ultraschall und Rückspülung. Die Figur 5 zeigt die Ultraschall-Quelle 33 und ihre Abstrahlmembrane 37, welche die Konzentratseite des Membranfilters 32 quasitangential beschallt. Eine solche quasitangentiale Hauptrichtung ist nicht kritisch, da der Ultraschall infolge seiner kugelförmigen Fortpflanzung auch an Verunreinigungspartikeln die gesamte Filterfläche gleichmässig beschallt. Bei der bisherigen Annahme eines zylinderförmigen Membranfilters dürfte eine Ultraschall-Quelle in der Zylinderachse genügen. Bei jeder anderen Form des Membranfilters (wie z.B. elliptischer oder polygoner Querschnitt) werden zwei oder mehr Ultraschall-Quellen benötigt zur gleichmässigen Beschallung der Filterfläche. Beim fünften Ausführungsbeispiel des Membranfilters 32 der Figur 5 soll die Beschallungszeit 4 Sekunden mit einer kontinuierlichen Frequenz von z.B. 400 kHz und die Rückspülzeit ebenfalls 6 Sekunden beanspruchen, wobei die durch Oeffnung des Ventils 24 hervorgerufene Rückspülung eine Sekunde früher als die Beschallung beginnen soll. Das Ventil 41 steuert das Durchspülintervall.

Die Diskussion der fünf Ausführungsbeispiele anhand der Figuren 1 - 5 zeigte, dass die Beschallung des Membranfilters 32 mit Ultraschall jeden der Reinigungszyklen verbessert, so dass kleinere Zeiten für die Zyklen und längere Abstände der Zyklen vorgesehen werden können. Ausserdem werden schalltote Räume auf den Flächen der Membranfilter vermieden. Durch diese Massnahmen wird der Wirkungsgrad beträchtlich erhöht.

Die Filterbauteile sind so konstruiert, dass sie in bereits bestehende Anlagen eingebaut werden können. Die Konstruktion der Filterbauteile ist einfach, so dass ihre äusseren Abmessungen und Formen (zylinder-, ellipsen- oder polygonförmig) den jeweiligen räumlichen Verhältnissen angepasst werden können. Es ist auch ohne weiteres möglich, dass zwei oder mehrere Filterbauteile in die gesamte Anlage dort eingesetzt werden, wo die Betriebsverhältnisse und der Einsatzort es verlangen.

## Patentansprüche

1. Vorrichtung zum Reinigen der Bearbeitungsflüssigkeit für eine elektroerosive oder elektrochemische Bearbeitungsmaschine, umfassend:

   - eine Einrichtung (12) zum Ausfällen (Sedimentieren) der aus der Bearbeitungszone kommenden Bearbeitungsflüssigkeit,
   - eine Filtereinheit mit einem Gehäuse (300), welches durch einen Membranfilter (32) zum Filtern der Bearbeitungsflüssigkeit in einen Konzentratraum (30) und einen Permeatraum (31) unterteilt ist, wobei der Konzentratraum (30) eine Einströmöffnung (B) und eine verschliessbare Ausströmöffnung für das Konzentrat hat, und wobei mindestens eine Ultraschallquelle (33) in der Nähe des Membranfilters (32) vorgesehen ist,
   - einen Konzentratbehälter (17), welcher in der strömungstechnischen Verbindung zwischen der Einrichtung (12) zum Ausfällen und der Einströmöffnung (B) angeordnet ist,
   - Mittel, um die Ausströmoffnung mit der Einrichtung (12) zum Ausfällen strömungstechnisch zu verbinden,
   - Mittel zum Ableiten des Permeates aus dem Permeatraum
   - eine Einrichtung (23, 24, 34) zum Rückspülen des Membranfilters,
   - ein Steuergerät (25), das die Ausströmöffnung während der Filtrationsphase schliesst und während der Rückspül-/Durchspülphase öffnet, das die Ultraschallquelle nur während der Rückspülphase in Betrieb nimmt, das während der Rückspülphase die Einrichtung zum Rückspülen in Betrieb nimmt und das während der Durchspülphase, welche intervallmässig durchgeführt wird, Mittel (19) in Betrieb nimmt, welche die Bearbeitungsflüssigkeit vom Konzentratbehälter (17) in den Konzentratraum (30) der Filtereinheit leiten,
   - wobei die Vorrichtung Entsorgungsmittel (12, 14, 18) zum Entsorgen der aus der Bearbeitungsflüssigkeit ausgeschiedenen Verunreinigungspartikel umfasst.

2. Vorrichtung nach Anspruch 1, dadurch gekennzeichnet, dass der Membranfilter (32) scheibenförmig oder röhrenförmig mit einer der Filterfeinheit angepassten Minimalwandstärke ausgebildet ist.

3. Vorrichtung nach Anspruch 1, dadurch gekennzeichnet, dass der Konzentratraum (30) eine solche Form aufweist, die eine Sedimentation in der im Konzentratraum befindlichen Bearbeitungsflüssigkeit begünstigt.

4. Vorrichtung nach einem der Ansprüche 1, 2, 3, dadurch gekennzeichnet, dass mindestens eine Ultraschallquelle (33) im Permeatraum (31) des Filtergehäuses (300) vorgesehen ist, deren Abstrahlfläche (37) zum Membranfilter (32) gerichtet ist.

5. Vorrichtung nach einem der Ansprüche 1, 2, 3, dadurch gekennzeichnet, dass mindestens eine Ultraschallquelle (33) im Konzentratraum (30) des Filtergehäuses (300) vorgesehen ist, deren Abstrahlfläche (37) zum Membranfilter gerichtet ist.

6. Vorrichtung nach einem der Ansprüche 1, 2, 4, 5, dadurch gekennzeichnet, dass mehrere Ultraschallquellen (33) am äusseren Umfang des Filtergehäuses (300), welches zylinderförmig, elliptisch oder polygon geformt ist, angeordnet sind, deren Abstrahlflächen (37) auf den Membranfilter (32) vom Permeatraum (31) des Gehäuses (300) ausgerichtet sind.

7. Vorrichtung nach einem der Ansprüche 1, 2, 4, 5, dadurch gekennzeichnet, dass am äusseren Umfang des Filtergehäuses (300), welches die Form eines Zylinders, einer Ellipse oder eines Polygons aufweist, mehrere Ultraschallquellen (33) angeordnet sind, die mit ihren Abstrahlflächen (37) den Membranfilter vom Konzentratraum (30) des Gehäuses (300) aus zu beschallen in der Lage sind.

8. Vorrichtung nach Anspruch 4 oder 5, dadurch gekennzeichnet, dass der Gradient der Abstrahlfläche (37) der im Filtergehäuse (300) vorgesehenen, mindestens einen Ultraschallquelle (33) im wesentlichen parallel und in einem Winkelbereich von ±20° zur Strömungsrichtung der Bearbeitungsflüssigkeit angeordnet ist.

9. Vorrichtung nach Anspruch 4 oder 5, dadurch gekennzeichnet, dass der Gradient der Abstrahlfläche (37) der mindestens einen Ultraschallquelle (33) im wesentlichen rechtwinklig und in einem Winkelbereich von ±20° zur Strömungsrichtung der Bearbeitungsflüssigkeit angeordnet ist.

10. Vorrichtung nach einem der Ansprüche 1, 2, 4, 5, 6, 7, 8, 9, dadurch gekennzeichnet, dass ein Steuergerät (25) jeden Reinigungszyklus und jedes Durchspülintervall des durch den Filtervorgang verunreinigten Membranfilters (32) in der Weise steuert, dass die mindestens eine Ultraschallquelle (33) mit einem bestimmten Betriebsmuster die Verunreinungspartikel in den Membranporen lockert und eine Rückspülung zur Entfernung der Verunreinigungspartikel durchgeführt wird, wobei das Durchspülintervall sich der Rückspülung zeitlich anschliesst.

11. Vorrichtung nach Anspruch 10, dadurch gekennzeichnet, dass jede Ultraschallquelle (33) in der Lage ist, den Membranfilter (32) mit einer bestimmten Frequenz, die im Bereich von 10 kHz bis 2 MHz liegt, kontinuierlich oder impulsmässig zu beschallen.

12. Vorrichtung nach einem der Ansprüche 6, 7, dadurch gekennzeichnet, dass ein Steuergerät (25) jede der am äusseren Umfang des Filtergehäuses (300) angeordneten Ultraschallquellen (33) so mit einer zeitlichen Phasenverschiebung ansteuert, dass in dem beschallten Membranfilter (32) eine mit einer bestimmten Frequenz umlaufende Beschallungswelle entsteht, um so die Verunreinigungspartikel in den Membranporen zu lockern.

13. Vorrichtung nach Anspruch 1, dadurch gekennzeichnet, dass die Einrichtung (12) zum Ausfällen der in der Bearbeitungsflüssigkeit enthaltenen Verunreinigungspartikel eine verschliessbare Öffnung (14) zum Entfernen der aus der Bearbeitungsflüssigkeit ausgeschiedenen Verunreinigungspartikel aufweist.

14. Vorrichtung nach Anspruch 3, dadurch gekennzeichnet, dass der Konzentratraum (30) des Gehäuses (300) durch Mittel (34, 41) verschliessbar und öffenbar ist, so dass im geöffneten Zustand die aus der Bearbeitungsflüssigkeit ausgeschiedenen Verunreinigungspartikel entfernbar sind.

15. Vorrichtung nach Anspruch 14, dadurch gekennzeichnet, dass die Öffnung (14) durch ein Ventil (41) verschliessbar und öffenbar ist, wobei eine elektronische Steuerschaltung (25) die Öffnungs- und Schliessvorgänge nach einem vorbestimmten Muster steuert.

## Claims

1. Device for cleaning the processing liquid for a spark-erosion or electrochemical processing machine, comprising:

   - an instrument (12) for precipitating (sedimenting) the processing liquid coming from the processing zone,
   - a filter unit having a casing (300) which is subdivided by a membrane filter (32) for filtering the processing liquid into a concentrate space (30) and a permeate space (31), the concentrate space (30) having an inlet opening (B) and a closable outlet opening for the concentrate, and at least one ultrasound source (33) being provided in the vicinity of the membrane filter (32),
   - a concentrate container (17) which is arranged in the fluidic connection between the instrument (12) for precipitation and the inlet opening (B),
   - means for fluidically connecting the outlet opening to the instrument (12) for precipitation,
   - means for drawing the permeate from the permeate space
   - an instrument (23, 24, 34) for flushing back the membrane filter,
   - a controller (25) which closes the outlet opening during the filtration phase and opens it during the flush-back/through phase, which sets the ultrasound source in operation only during the flush-back phase, which sets the instrument for flushing back in operation during the flush-back phase and which, during the flush-through phase which is carried out at intervals, sets in operation means (19) which feed the processing liquid from the concentrate container (17) to the concentrate space (30) of the filter unit,

- the device comprising disposal means (12, 14, 18) for disposing of the contamination particles separated from the processing liquid.

2. Device according to Claim 1, characterized in that the membrane filter (32) is designed in a disc shape or a tube shape with a minimum wall thickness tailored to the filter grade.

3. Device according to Claim 1, characterized in that the concentrate space (30) has a shape such that it promotes sedimentation of the processing liquid contained in the concentrate space.

4. Device according to one of Claims 1, 2, 3, characterized in that at least one ultrasound source (33) is provided in the permeate space (31) of the filter casing (300), the emission surface (37) of which ultrasound source (33) is directed at the membrane filter (32).

5. Device according to one of Claims 1, 2, 3, characterized in that at least one ultrasound source (33) is provided in the concentrate space (30) of the filter casing (300), the emission surface (37) of which ultrasound source (33) is directed at the membrane filter.

6. Device according to one of Claims 1, 2, 4, 5, characterized in that a plurality of ultrasound sources (33) are arranged on the external circumference of the filter casing (300) which is cylindrically, elliptically or polygonally shaped, the emission surfaces (37) of which ultrasound sources (33) are aligned with the membrane filter (32) of the permeate space (31) of the casing (300).

7. Device according to one of Claims 1, 2, 4, 5, characterized in that, on the external circumference of the filter casing (300) which has the shape of a cylinder, an ellipse or a polygon, a plurality of ultrasound sources (33) are arranged which are capable of irradiating the membrane filter of the concentrate space (30) of the casing (300) using their emission surfaces (37).

8. Device according to Claim 4 or 5, characterized in that the gradient of the emission surface (37) of the at least one ultrasound source (33) provided in the filter casing (300) is arranged essentially parallel and in an angle range of ±20° with respect to the flow direction of the processing liquid.

9. Device according to Claim 4 or 5, characterized in that the gradient of the emission surface (37) of the at least one ultrasound source (33) is arranged essentially orthogonal and in an angle range of ±20° with respect to the flow direction of the processing liquid.

10. Device according to one of Claims 1, 2, 4, 5, 6, 7, 8, 9, characterized in that a controller (25) controls each cleaning cycle and each flush-through interval of the membrane filter (32) contaminated by the filter process in such a way that the at least one ultrasound source (33) loosens the contamination particles in the membrane pores with a predetermined operating pattern and flushing back is carried out to remove the contamination particles, the flush-through interval chronologically following the flushing back.

11. Device according to Claim 10, characterized in that each ultrasound source (33) is capable of irradiating the membrane filter (32) continuously or in pulses with a particular frequency which lies in the range of from 10 kHz to 2 MHz.

12. Device according to Claim 6, 7, characterized in that a controller (25) drives each of the ultrasound sources (33) arranged on the external circumference of the filter casing (300) in such a way with a temporal phase shift as to create an irradiation sound wave circulating with a particular frequency in the irradiated membrane filter (32), in order thus to loosen the contamination particles in the membrane pores.

13. Device according to Claim 1, characterized in that the instrument (12) for precipitating the contamination particles contained in the processing liquid has a closable opening (14) for removing the contamination particles separated from the processing liquid.

14. Device according to Claim 3, characterized in that the concentrate space (30) of the casing (300), using means (34, 41), can be closed and can be opened so that in the open state the contamination particles separated from the processing liquid can be removed.

**15.** Device according to Claim 14, characterized in that the opening (14), using a valve (41), can be closed and can be opened, an electronic control circuit (25) controlling the opening and closing processes according to a predetermined pattern.

## Revendications

**1.** Dispositif pour le nettoyage du liquide d'usinage pour une machine d'usinage par électro-érosion ou d'usinage électro-chimique, comprenant

- un dispositif (12) pour la décantation (sédimentation) du liquide d'usinage provenant de la zone d'usinage,
- une unité de filtrage avec une enceinte (300), qui est divisée en une chambre de concentrat (30) et une chambre de perméat (31) par un filtre à membrane (32) pour le filtrage du liquide d'usinage, la chambre de concentrat (30) présentant une ouverture d'entrée (B) et une ouverture de sortie obturable pour le concentrat, et au moins une source d'ultra-sons (33) étant prévue à proximité du filtre à membrane (32),
- un réservoir de concentrat (17), qui est disposé en relation d'écoulement entre le dispositif (12) de décantation et l'ouverture d'entrée (B),
- des moyens, pour mettre en relation d'écoulement l'ouverture de sortie avec le dispositif (12) de décantation,
- des moyens pour évacuer le perméat hors de la chambre de perméat,
- un dispositif (23, 24, 34) pour le rétrolavage du filtre à membrane,
- un appareil de commande (25), qui ferme l'ouverture de sortie pendant la phase de filtrage et l'ouvre pendant la phase de rétrolavage/rinçage, qui met en service la source d'ultra-sons uniquement pendant la phase de rétrolavage, qui met en service le dispositif de rétrolavage pendant la phase de rétrolavage et qui met en service, pendant la phase de rinçage, qui est effectuée par intermittence, des moyens (19), qui conduisent le liquide d'usinage du réservoir de concentrat (17) dans la chambre de concentrat (30) de l'unité de filtrage,
- dans lequel le dispositif comprend des moyens d'élimination (12, 14, 18) pour l'élimination des particules d'impuretés précipitées hors du liquide d'usinage.

**2.** Dispositif suivant la revendication 1, caractérisé en ce que le filtre à membrane (32) est réalisé en forme de disque ou de tube avec une épaisseur de paroi minimale adaptée à la finesse du filtre.

**3.** Dispositif suivant la revendication 1, caractérisé en ce que la chambre de concentrat (30) présente une forme telle qu'elle favorise une sédimentation dans le liquide d'usinage se trouvant dans la chambre de concentrat.

**4.** Dispositif suivant l'une quelconque des revendications 1, 2, 3, caractérisé en ce qu'il est prévu au moins une source d'ultra-sons (33) dans la chambre de perméat (31) de l'enceinte de filtrage (300), dont la face d'émission (37) est orientée vers le filtre à membrane (32).

**5.** Dispositif suivant l'une quelconque des revendications 1, 2, 3, caractérisé en ce qu'il est prévu au moins une source d'ultra-sons (33) dans la chambre de concentrat (30) de l'enceinte de filtrage (300), dont la face d'émission (37) est orientée vers le filtre à membrane.

**6.** Dispositif suivant l'une quelconque des revendications 1, 2, 4, 5, caractérisé en ce que plusieurs sources d'ultra-sons (33) sont disposées à la périphérie extérieure de l'enceinte de filtrage (300), qui est de forme cylindrique, elliptique ou polygonale, dont les faces d'émission (37) sont orientées vers le filtre à membrane (32) à partir de la chambre de perméat (31) de l'enceinte (300).

**7.** Dispositif suivant l'une quelconque des revendications 1, 2, 4, 5, caractérisé en ce que plusieurs sources d'ultra-sons (33) sont disposées à la périphérie extérieure de l'enceinte de filtrage (300), qui a la forme d'un cylindre, d'une ellipse ou d'un polygone, dont les faces d'émission (37) sont en mesure d'exposer le filtre à membrane aux ultra-sons à partir de la chambre de concentrat (30) de l'enceinte (300).

**8.** Dispositif suivant la revendication 4 ou 5, caractérisé en ce que le gradient de la face d'émission (37) de la au moins une source d'ultra-sons (33) prévue dans l'enceinte de filtrage (300), est disposé essentiellement parallèlement et dans une fourchette d'angles de ± 20° par rapport à la direction d'écoulement du liquide d'usinage.

**9.** Dispositif suivant la revendication 4 ou 5, caractérisé en ce que le gradient de la face d'émission (37) de la au moins une source d'ultra-sons (33) est disposé essentiellement perpendiculairement et dans une fourchette d'angles de ± 20° par rapport à la direction d'écoulement du liquide d'usinage.

**10.** Dispositif suivant l'une quelconque des revendications 1, 2, 4, 5, 6, 7, 8, 9, caractérisé en ce qu'un appareil de commande (25) commande chaque cycle de nettoyage et chaque intervalle de rinçage du filtre à membrane (32) souillé par l'opération de filtrage, d'une façon telle que la au moins une source d'ultra-sons (33) détache les particules d'impuretés dans les pores de la membrane suivant un schéma de fonctionnement déterminé et qu'un rétrolavage destiné à l'élimination des particules d'impuretés soit effectué, l'intervalle de rinçage suivant immédiatement le rétrolavage.

**11.** Dispositif suivant la revendication 10, caractérisé en ce que chaque source d'ultra-sons (33) est en mesure d'exposer le filtre à membrane (32) aux ultra-sons, de façon continue ou par des impulsions, avec une fréquence déterminée qui se situe dans la fourchette de 10 kHz à 2 MHz.

**12.** Dispositif suivant l'une des revendications 6, 7, caractérisé en ce qu'un appareil de commande (25) active chacune des sources d'ultra-sons (33) disposées à la périphérie extérieure de l'enceinte de filtrage (300), avec un déphasage temporel tel qu'il apparaisse, dans le filtre à membrane (32) exposé aux ultra-sons, une onde ultrasonore la baignant avec une fréquence déterminée, afin de détacher ainsi les particules d'impuretés dans les pores de la membrane.

**13.** Dispositif suivant la revendication 1, caractérisé en ce que le dispositif (12) de décantation des particules d'impuretés contenues dans le liquide d'usinage présente une ouverture obturable (14) pour l'élimination des particules d'impuretés précipitées hors du liquide d'usinage.

**14.** Dispositif suivant la revendication 3, caractérisé en ce que la chambre de concentrat (30) de l'enceinte (300) peut être obturée et ouverte par des moyens (34, 41), d'une façon telle qu'en position ouverte, les particules d'impuretés précipitées hors du liquide d'usinage puissent être éliminées.

**15.** Dispositif suivant la revendication 14, caractérisé en ce que l'ouverture (14) peut être fermée et ouverte par une vanne (41), un circuit de commande électronique (25) commandant l'opération d'ouverture et de fermeture suivant un schéma prédétermine.

ECM ▼ EDM

Fig. 1

Fig. 2

Fig. 3

Fig. 4

Fig. 5